# EUROPEAN PATENT SPECIFICATION

(11) **EP 2 459 376 B1**
(45) Date of publication and mention of the grant of the patent: **24.06.2015**
(21) Application number: 10740104.4
(22) Date of filing: 30.07.2010
(51) Int. Cl.: B32B 27/34, D04H 1/64, D06M 15/59, D06M 17/08, D06M 13/148, B29C 70/34, B29C 70/06, B29C 65/70, B29C 45/14, C08L 77/00, C08J 5/10, C08J 5/04, B29C 41/20, B32B 5/26, B29L 31/30, B29K 105/08, B29L 31/28, B32B 5/28, B32B 27/04, B32B 27/12, C08K 5/053

(54) **OVERMOLDED HEAT RESISTANT POLYAMIDE COMPOSITE STRUCTURES AND PROCESSES FOR THEIR PREPARATION**
UMSPRITZTE HITZEBESTÄNDIGE POLYAMIDVERBUNDSTRUKTUREN UND VERFAHREN ZU IHRER HERSTELLUNG
STRUCTURES COMPOSITES EN POLYAMIDE SURMOULÉES RÉSISTANTES À LA CHALEUR ET LEURS PROCÉDÉS DE PRÉPARATION

(30) Priority: 30.07.2009 US 229807 P
(43) Date of publication of application: 06.06.2012
(73) Proprietor: E. I. du Pont de Nemours and Company, Wilmington, DE 19898 (US)
(72) Inventor: WAKEMAN, Martyn, Douglas, CH-1196 Gland (CH); KIRCHNER, Olaf, Norbert, CH-1272 Genolier (CH); YUAN, Shengmei, Newark Delaware 19711 (US)
(74) Representative: Morf, Jan Stefan
(86) International application number: PCT/US2010/043877
(87) International publication number: WO 2011/014751

(56) References cited:
- EP-A2- 1 041 109
- JP-A- 2005 067 107
- JP-A- 2008 274 305
- US-A1- 2003 193 151
- US-A1- 2008 008 879
- US-A1- 2009 127 740

## Description

### FIELD OF THE INVENTION

The present invention relates to the field of overmolded composite structures and processes for making them, particularly it relates to the field of overmolded heat resistant polyamide composite structures.

### BACKGROUND OF THE INVENTION

With the aim of replacing metal parts for weight saving and cost reduction while having comparable or superior mechanical performance, structures based on composite materials comprising a polymer matrix containing a fibrous material have been developed. With this growing interest, fiber reinforced plastic composite structures have been designed because of their excellent physical properties resulting from the combination of the fibrous material and the polymer matrix and are used in various end-use applications. Manufacturing techniques have been developed for improving the impregnation of the fibrous material with a polymer matrix to optimize the properties of the composite structure.

In highly demanding applications, such as for example structural parts in automotive and aerospace applications, composite materials are desired due to a unique combination of light weight, high strength and temperature resistance.

High performance composite structures can be obtained using thermosetting resins or thermoplastic resins as the polymer matrix. Thermoplastic-based composite structures present several advantages over thermoset-based composite structures such as, for example, the fact that they can be post-formed or reprocessed by the application of heat and pressure; a reduced time is needed to make the composite structures because no curing step is required; and they have increased potential for recycling. Indeed, the time consuming chemical reaction of cross-linking for thermosetting resins (curing) is not required during the processing of thermoplastics.

Among thermoplastic resins, polyamides are particularly well suited for manufacturing composite structures. Thermoplastic polyamide compositions are desirable for use in a wide range of applications including parts used in automobiles, electrical/electronic parts, household appliances and furniture because of their good mechanical properties, heat resistance, impact resistance and chemical resistance and because they may be conveniently and flexibly molded into a variety of articles of varying degrees of complexity and intricacy.

US 4,255,219 discloses a thermoplastic sheet material useful in forming composites. The disclosed thermoplastic sheet material is made of polyamide 6 and a dibasic carboxylic acid or anhydride or esters thereof and is formed into a composite by layering the sheet with at least one reinforcing mat of long glass fibers and heating under pressure. However, composites made from polyamide 6 may show a loss of their mechanical properties over a typical end-use application temperature range, such as for example -40°C to +120°C. Moreover, composites made of polyamide 6 may suffer from poor heat stability and thermal degradation during their manufacture and upon use thus leading to composites having reduced mechanical properties and a reduced performance upon use and time.

For making integrated composite structures and to increase the performance of polymers, it is often desired to "overmold" one or more parts made of a polymer onto a portion or all of the surfaces of a composite structure so as to surround or encapsulate said surfaces. Overmolding involves shaping, e.g. by injection molding, a second polymer part directly onto at least a portion of one or more surfaces of the composite structure, to form a two-part composite structure, wherein the two parts are adhered one to the other at least at one interface. The polymer compositions used to impregnate the fibrous material (i.e. the matrix polymer composition) and the polymer compositions used to overmold the impregnated fibrous material (i.e. the overmolding polymer composition) are desired to have good adhesion one to the other, extremely good dimensional stability and retain their mechanical properties under adverse conditions, including thermal cycling, so that the composite structure is protected under operating conditions and thus has an increased lifetime. Examples of polyamides that can be used to impregnate a fibrous layer and to overmold the impregnated layer are semi-aromatic polyamides. WO 2007/149300 discloses a semi-aromatic polyamide composite article comprising a component comprising a fiber-reinforced material comprising a polyamide matrix composition, an overmolded component comprising a polyamide composition, and an optional tie layer therebetween, wherein at least one of the polyamide compositions is a semi-aromatic polyamide composition. The disclosed structures are said to exhibit physical properties that render them suitable for use as replacements for metal components in various applications. Unfortunately, conventional polyamide compositions that are used to impregnate one or more fibrous reinforcement layers and to overmold the one or more impregnated fibrous layers may suffer from an unacceptable deterioration of their mechanical properties during their manufacture and upon long-term high temperature exposure during use and therefore, they may be non-ideal for making overmolded composite structures used in highly demanding applications such as for example in the automotive field. Indeed, there is a current and general desire in the automotive field for example to have high temperature resistant structures. Such high temperature resistant structures are required to retain their mechanical properties when they are exposed to temperatures higher than 120°C or even higher than 200°C, such as those often reached in underhood areas of automobiles or to retain their mechanical properties at an intermediate temperature, such as for example 90 C, for a long term exposure. When plastic parts are exposed to such combinations of time and temperature, it is a common phenomenon that the mechanical properties tend to decrease due to the thermo-oxidation of the polymer. This phenomenon is called heat aging.

With the aim of improving the manufacture of composite structures and integrated composite structures and allowing an easier, shorter and uniform impregnation of the fibrous material, several ways have been developed to decrease the melt viscosity of the polymer matrix. By having a melt viscosity as low as possible, polymer compositions flow faster and are thus easier to process. By reducing the melt viscosity of the polymer matrix, the limiting impregnation time needed to reach the desired degree of impregnation may be shortened, thereby increasing the overall manufacturing speed and thus leading to an increased productivity of the manufacture of the structures and to a decrease of energy consumption associated with a shorter cycle time which is beneficial also for environmental concerns.

FR 2,158,422 discloses a composite structure made of a low molecular weight polyamide matrix and reinforcing fibers. Due to the low molecular weight of the polyamide, the polyamide has low viscosity. The low viscosity of the polyamide matrix allows an efficient impregnation of the reinforcing fibers. Nevertheless, the use of low molecular weight polyamides may be associated with inferior mechanical properties of the composite structure.

US 7,323,241 discloses a composite structure made of reinforcing fibers and a branched polyamide resin having a star structure. The disclosed polyamide having a star structure is said to exhibit a high fluidity in the molten state thus making possible a good impregnation of the reinforcing fibers so as to form a composite structure having good mechanical properties.

The existing technologies of using a highly flowable polyamide composition for improving or accelerating the impregnation of the fibrous material lead to composite structures that are not ideal for highly demanding applications such as for example in the automotive field.

Unfortunately, the existing technologies fail to combine an easy and efficient processability in terms of the impregnation rate of the fibrous material by a polymer, a good thermal resistance and a good retention of mechanical properties against long-term high temperature exposure.

There is a need for an overmolded composite structure comprising a fibrous material that can be easily, rapidly and efficiently impregnated with a matrix resin composition having a good melt rheology, which overmolded composite structure exhibits a good thermal resistance during its manufacture and a good resistance against long-term high temperature

### SUMMARY OF THE INVENTION

There is disclosed and claimed herein an overmolded composite structure comprising:
i) a first component having a surface, which surface has at least a portion made of a surface resin composition, and comprising a fibrous material selected from the group consisting of non-woven structures, textiles, fibrous battings and combinations thereof, said fibrous material being impregnated with a matrix resin composition, wherein said surface resin composition and said matrix resin composition are polyamide compositions comprising a) one or more polyamide resins, and b) one or more polyhydric alcohols having more than two hydroxyl groups; and
ii) a second component comprising an overmolding resin composition,
   wherein said second component is adhered to said first component over at least a portion of the surface of said first component, the portion of the surface being made of said surface resin composition.

In a second aspect, the invention provides a process for making the overmolded composite structure described above. The process for making the overmolding composite structure described above comprises a step of overmolding a second component comprising an overmolding resin composition on the first component described above.

### DETAILED DESCRIPTION

The overmolded composite structures according to the present invention offer a good thermal stability during their manufacture, a good resistance against long-term high temperature exposure, a good retention of the mechanical properties upon such exposure and can be manufactured in an efficient way and at a low cost due to the optimum melt rheology of the matrix resin used to impregnate the fibrous material.

As used throughout the specification, the phrases "about" and "at or about" are intended to mean that the amount or value in question may be the value designated or some other value about the same. The phrase is intended to convey that similar values promote equivalent results or effects according to the invention.

As used herein, the term "high temperature long-term exposure" refers to a combination of exposure factors, i.e. time and temperature. Polymers which demonstrate heat aging performance under lab conditions or under conditions of the lifetime of the polymers such as those reached in underhood areas of automobiles (e.g. at a temperature at or in excess of 120°C, preferably at or in excess of 160°C, more preferably at or in excess of 180°C and still more preferably at or in excess of 200°C and the aging or exposure being at or in excess of 500 hours and preferably at or in excess of 1000 hours) can be shown to exhibit similar performance at lower temperatures for a much longer period of aging or exposure. The temperature dependence of the rate constants of polymer degradation is known from the literature such as for example in Journal of Materials Science, 1999, 34, 843-849, and is described by Arrhenius law; as an example aging at 180°C for 500 hours is more-or-less equivalent to aging at 80°C for 12 years.

The present invention relates to overmolded composite structures and processes to make them. The overmolded composite structure according to the present invention comprises at least two components, i.e. a first component and a second component. The first component consists of a composite structure having a surface, which surface has at least a portion made of a surface resin composition, and comprises a fibrous material selected from the group consisting of non-woven structures, textiles, fibrous battings and combinations thereof, said fibrous material being impregnated with a matrix resin composition. The matrix resin composition and the surface resin composition are polyamide compositions comprising a) one or more polyamide resins and b) one or more polyhydric alcohols having more than two hydroxyl groups and the second component comprises an overmolding resin composition. The surface resin composition and the matrix resin composition may be identical or different. When the surface resin composition and the matrix resin composition are different, it means that the component a), i.e. the one or more polyamide resins, and/or the component b), i.e. the one or more polyhydric alcohols having more than two hydroxyl groups, are not the same and/or that the amounts of component a) and b) are different in the surface resin composition and the matrix resin composition.

The overmolded composite structure may comprise more than one first components, i.e. it may comprise more than one composite structures and may comprise more than one second components.

The second component is adhered to the first component over at least a portion of the surface of said first component, the portion of the surface being made of the surface resin composition described herein. The first component may be fully or partially encapsulated by the second component.

As used herein, the term "a fibrous material being impregnated with a matrix resin composition" means that the matrix resin composition encapsulates and embeds the fibrous material so as to form an interpenetrating network of fibrous material substantially surrounded by the matrix resin composition. For purposes herein, the term "fiber" is defined as a macroscopically homogeneous body having a high ratio of length to width across its cross-sectional area perpendicular to its length. The fiber cross section can be any shape, but is typically round. The fibrous material may be in any suitable form known to those skilled in the art and is preferably selected from the group consisting of non-woven structures, textiles, fibrous battings and combinations thereof. Non-woven structures are random fiber orientation or aligned fibrous structures. Examples of random fiber orientation include without limitation chopped and continuous material which can be in the form of a mat, a needled mat or a felt. Examples of aligned fibrous structures include without limitation unidirectional fiber strands, bidirectional strands, multidirectional strands, multi-axial textiles. Suitable textiles are woven forms, knits, braids and combinations thereof.

The fibrous material can be continuous or discontinuous in form. Depending on the end-use application of the overmolded composite structure and the required mechanical properties, more than one fibrous materials can be used, either by using several same fibrous materials or a combination of different fibrous materials, i.e. the first component described herein may comprise one or more fibrous materials. An example of a combination of different fibrous materials is a combination comprising a non-woven structure such as for example a planar random mat which is placed as a central layer and one or more woven continuous fibrous materials that are placed as outside layers. Such a combination allows an improvement of the processing and thereof of the homogeneity of the first component thus leading to improved mechanical properties of the overmolded composite structure. The fibrous material may be made of any suitable material or a mixture of materials provided that the material or the mixture of materials withstand the processing conditions used during the impregnation by the matrix resin composition and the surface resin composition and during the overmolding of the first component by the overmolding resin composition.

Preferably, the fibrous material comprises glass fibers, carbon fibers, aramid fibers, graphite fibers, metal fibers, ceramic fibers, natural fibers or mixtures thereof; more preferably, the fibrous material comprises glass fibers, carbon fibers, aramid fibers, natural fibers or mixtures thereof; and still more preferably, the fibrous material comprises glass fibers, carbon fibers and aramid fibers or mixture mixtures thereof. By natural fiber, it is meant any of material of plant origin or of animal origin. When used, the natural fibers are preferably derived from vegetable sources such as for example from seed hair (e.g. cotton), stem plants (e.g. hemp, flax, bamboo; both bast and core fibers), leaf plants (e.g. sisal and abaca), agricultural fibers (e.g., cereal straw, corn cobs, rice hulls and coconut hair) or lignocellulosic fiber (e.g. wood, wood fibers, wood flour, paper and wood-related materials). As mentioned above, more than one fibrous materials can be used. A combination of fibrous materials made of different fibers can be used such as for example a first component comprising one or more central layers made of glass fibers or natural fibers and one or more surface layers made of carbon fibers or glass fibers. Preferably, the fibrous material is selected from the group consisting of woven structures, non-woven structures or combinations thereof, wherein said structures are made of glass fibers and wherein the glass fibers are E-glass filaments with a diameter between 8 and 30 µm and preferably with a diameter between 10 to 24 µm.

The fibrous material may further comprise a thermoplastic material, for example the fibrous material may be in the form of commingled or co-woven yarns or a fibrous material impregnated with a powder made of a thermoplastic material that is suited to subsequent processing into woven or non-woven forms, or a mixture for use as a uni-directional material.

Preferably, the ratio between the fibrous material and the polymer materials in the first component (i.e. in the composite structure), i.e. the fibrous material in combination with the matrix resin composition and the surface resin composition, is at least 30% fibrous material and more preferably between 40 and 60% fibrous material, the percentage being a volume-percentage based on the total volume of the composite structure.

The surface resin composition and the matrix resin composition are polyamide compositions comprising a) one or more poiyamide resins and b) one or more polyhydric alcohols having more than two hydroxyl groups.

Polyamide resins are condensation products of one or more dicarboxylic acids and one or more diamines, and/or one or more aminocarboxylic acids, and/or ring-opening polymerization products of one or more cyclic lactams. The one or more polyamide resins are selected from the group consisting of fully aliphatic polyamide resins, semi-aromatic polyamide resins and mixtures thereof. The term "semi-aromatic" describes polyamide resins that comprise at least some aromatic carboxylic acid monomer(s) and aliphatic diamine monomer(s), in comparison with "fully aliphatic" which describes polyamide resins comprising aliphatic carboxylic acid monomer(s) and aliphatic diamine monomer(s).

Fully aliphatic polyamide resins are formed from aliphatic and alicyclic monomers such as diamines, dicarboxylic acids, lactams, aminocarboxylic acids, and their reactive equivalents. A suitable aminocarboxylic acid includes 11-aminododecanoic acid. In the context of this invention, the term "fully aliphatic polyamide resin" also refers to copolymers derived from two or more such monomers and blends of two or more fully aliphatic polyamide resins. Linear, branched, and cyclic monomers may be used.

Carboxylic acid monomers comprised in fully aliphatic polyamide resins include, but are not limited to, aliphatic carboxylic acids, such as for example adipic acid (C6), pimelic acid (C7), suberic acid (C8), azelaic acid (C9), sebacic acid (C10), dodecanedioic acid (C12) and tetradecanedioic acid (C14). Diamines can be chosen among diamines having four or more carbon atoms, including, but not limited to tetramethylene diamine, hexamethylene diamine, octamethylene diamine, decamethylene diamine, 2-methylpentamethylene diamines, 2-ethyltetramethylene diamine, 2-methyloctamethylene diamine, trímethylhexamethylene diamine and/or mixtures thereof. Suitable examples of fully aliphatic polyamide resins include PA6; PA6,6; PA4,6; PA6,10; PA6,12; PA6,14; P6,13; PA6,15; PA6,16; PA11; PA 12; PA10; PA 9,12; PA9,13; PA9,14; PA9,15; P6,16; PA9,36; PA10,10; PA10,12; PA10,13; PA10,14; PA12,10; PA12,12; PA12.13; 12,14 and copolymers and blends of the same. Preferred examples of fully aliphatic polyamide resins comprised in the polyamide composition described herein include PA6, PA11, PA12, PA4,6, PA6,6, PA,10; PA6,12; PA10,10 and copolymers and blends of the same.

Semi-aromatic polyamide resins are homopolymers, copolymers, terpolymers, or higher polymers wherein at least a portion of the acid monomers are selected from one or more aromatic carboxylic acids. The one or more aromatic carboxylic acids can be terephthalic acid or mixtures of terephthalic acid and one or more other carboxylic acids, like isophthalic acid, substituted phthalic acid such as for example 2-methylterephthalic acid and unsubstituted or substituted isomers of naphthalenedicarboxylic acid, wherein the carboxylic acid component preferably contains at least 55 mole-% of terephthalic acid (the mole-% being based on the carboxylic acid mixture). Preferably, the one or more aromatic carboxylic acids are selected from the group consisting of terephthalic acid, isophthalic acid and mixtures thereof and more preferably, the one or more carboxylic acids are mixtures of terephthalic acid and isophthalic acid, wherein the mixture preferably contains at least 55 mole-% of terephthalic acid. Furthermore, the one or more carboxylic acids can be mixed with one or more aliphatic carboxylic acids, like adipic acid; pimelic acid; suberic acid; azelaic acid; sebacic acid and dodecanedioic acid, adipic acid being preferred. More preferably the mixture of terephthalic acid and adipic acid comprised in the one or more carboxylic acids mixtures of the semi-aromatic polyamide resin contains at least 25 mole-% of terephthalic acid. Semi-aromatic polyamide resins comprise one or more diamines that can be chosen among diamines having four or more carbon atoms, including, but not limited to tetramethylene diamine, hexamethylene diamines, octamethylene diamine, nonamethylene diamine, decamethylene diamine, 2-methylpentamethylene diamine, 2-ethyltetramethylene diamine, 2-methyloctamethylene diamine; trimethylhexamethylene diamine, bis(p-aminocyclohexyl)methane; *m*-xylylene diamine; *p*-xylylene diamine and/or mixtures thereof. Suitable examples of semi-aromatic polyamide resins include poly(hexamethylene terephthalamide) (polyamide 6,T), poly(nonamethylene terephthalamide) (polyamide 9,T), poly(decamethylene terephthalamide) (polyamide 10,T), poly(dodecamethylene terephthalamide) (polyamide 12,T), hexamethylene adipamide/hexamethylene terephthalamide copolyamide (polyamide 6,T/6,6), hexamethylene terephthalamide/hexamethylene isophthalamide (6,T/6,I), poly(*m*-xylylene adipamide) (polyamide MXD,6), hexamethylene adipamide/hexamethylene terephthalamide copolyamide (polyamide 6,T/6,6), hexamethylene terephthalamide/2-methylpentamethylene terephthalamide copolyamide (polyamide 6,T/D,T), hexamethylene adipamide/hexamethylene terephthalamide/hexamethylene isophthalamide copolyamide (polyamide 6,6/6,T/6,I); poly(caprolactam-hexamethylene terephthalamide) (polyamide 6/6,T) and copolymers and blends of the same. Preferred examples of semi-aromatic polyamide resins comprised in the polyamide composition described herein include PA6,T; PA6,T/6,6, PA6,T/6,1, PAMXD,6; PA6,T/D,T and copolymers and blends of the same.

The matrix resin composition and the surface resin composition are selected from polyamide compositions comprising one or more polyhydric alcohols having more than two hydroxyl groups. Preferably, the one or more polyhydric alcohols are present in the polyamide compositions described herein independently in an amount from at or about 0.25 wt-% to at or about 15 wt-%, more preferably from at or about 0.5 wt-% to at or about 10 wt-% and still more preferably from 0.5 wt-% to at or about 5 wt-%, the weight percentages being based on the total weight of the polyamide composition.

The one or more polyhydric alcohols may be independently selected from the group consisting of aliphatic hydroxylic compounds containing more than two hydroxyl groups, aliphatic-cycloaliphatic compounds containing more than two hydroxyl groups, cycloaliphatic compounds containing more than two hydroxyl groups and saccharides containing more than two hydroxy groups.

An aliphatic chain in the polyhydric alcohol can include not only carbon atoms but also one or more hetero atoms which may be selected, for example, from nitrogen, oxygen and sulphur atoms. A cycloaliphatic ring present in the polyhydric alcohol can be monocyclic or part of a bicyclic or polycyclic ring system and may be carbocyclic or heterocyclic. A heterocyclic ring present in the polyhydric alcohol can be monocyclic or part of a bicyclic or polycyclic ring system and may include one or more hetero atoms which may be selected, for example, from nitrogen, oxygen and sulphur atoms. The one or more polyhydric alcohols may contain one or more substituents, such as ether, carboxylic acid, carboxylic acid amide or carboxylic acid ester groups.

Examples of polyhydric alcohol containing more than two hydroxyl groups include, without limitation, triols, such as glycerol, trimethylolpropane, 2,3-di-(2'-hydroxyethyl)-cyclohexan-1-ol, hexane-1,2,6-triol, 1,1,1-tris-(hydroxymethyl)ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-trs-[(2'-hydroxyethoxy)-methyl]-ethane, 1,1,1-tris-[(2'-hydroxypropoxy)-methyl]-propane, 1,1,1-tris-(4-hydroxyphenyl)-ethane, 1,1,1-tris-(hydroxyphenyl)-propane, 1,1,3-tris-(dihydroxy-3-methylphenyl)-propane, 1,1,4-tris-(dihydroxyphenyl)-butane, 1,1,5-tris-(hydroxyphenyl)-3-methylpentane, di-trimethylopropane, trimethylolpropane ethoxylates, or trimethylolpropane propoxylates; polyols such as pentaerythritol, dipentaerythritol, and tripentaerythritol; and saccharides containing more than two hydroxyl groups, such as cyclodextrin, D-mannose, glucose, galactose, sucrose, fructose, xylose, arabinose, D-mannitol, D-sorbitol, D-or L-arabitol, xylitol, iditol, talitol, allitol, altritol, guilitol, erythritol, threitol, and D-gulonic-y-lactone and the like.

Preferred polyhydric alcohols include those having a pair of hydroxyl groups which are attached to respective carbon atoms which are separated one from another by at least one atom. Especially preferred polyhydric alcohols are those in which a pair of hydroxyl groups is attached to respective carbon atoms which are separated one from another by a single carbon atom.

Preferably, the one or more polyhydric alcohols comprised in the poiyamide composition described herein are independently selected from the group consisting of pentaerythritol, dipentaerythritol, tripentaerythritol, di-trimethylopropane, D-mannitol, D-sorbitol, xylitol and mixtures thereof. More preferably, the one or more polyhydric alcohols comprised in the polyamide composition described herein are independently selected from the group consisting of dipentaerythritol, tripentaerythritol, pentaerythritol and mixtures thereof. Still more preferably, the one or more polyhydric alcohols comprised in the polyamide composition described herein are dipentaerythritol and/or pentaerythritol.

The overmolded composite structure comprises a second component comprising an overmolding resin composition. The second component is adhered to the first component described above over at least a portion of the surface of the first component. The overmolding resin composition is made of a thermoplastic resin that is compatible with the surface resin composition. Preferably, the overmolding resin composition is made of one or more polyamide resins selected from the group consisting of aliphatic polyamide resins, semi-aromatic polyamide resins such as those described above and mixtures thereof, or is selected from polyamide compositions comprising a) one or more polyamide resins and b) one or more polyhydric alcohols having more than two hydroxyl groups, such a those described above.
The overmolding resin composition, the matrix resin composition and the surface resin composition may be identical or different. Preferably, the overmolding resin composition, the matrix resin composition and the surface resin composition are identical or different and are polyamide compositions described above, i.e. polyamide compositions comprising a) one or more polyamide resins and b) one or more polyhydric alcohols having more than two hydroxyl groups as described above.

The surface resin composition and/or the matrix resin composition and/or the overmolding resin composition may further comprise one or more impact modifiers, one or more heat stabilizers, one or more oxidative stabilizers, one or more reinforcing agents, one or more ultraviolet light stabilizers, one or more flame retardant agents or mixtures thereof Preferred impact modifiers include those typically used for polyamide compositions, including carboxyl-substituted polyolefins, ionomers and/or mixtures thereof, Carboxyl-substituted polyolefins are polyolefins that have carboxylic moieties attached thereto, either on the polyolefin backbone itself or on side chains. By "carboxylic moieties" it is meant carboxylic groups such as one or more of dicarboxylic acids, diesters, dicarboxylic monoesters, acid anhydrides, and monocarboxylic acids and esters. Useful impact modifiers include dicarboxyl-substituted polyolefins, which are polyolefins that have dicarboxylic moieties attached thereto, either on the polyolefin backbone itself or on side chains. By "dicarboxyiic moiety" it is meant dicarboxylic groups such as one or more of dicarboxylic acids, diesters, dicarboxylic monoesters, and acid anhydrides. The impact modifier may be based on an ethylene/alpha-olefin polyolefin such as for example ethylene/octene, Diene monomers such as 1,4-butadiene; 1,4-hexadiene; or dicyclopentadiene may optionally be used in the preparation of the polyolefin, Preferred polyolefins include ethylene-propylene-diene (EPDM) and styrene-ethylene-butadiene-styrene (SEBS) polymers. More preferred polyolefins include ethylene-propylene-diene (EPDM), wherein the term "EPDM" means a terpolymer of ethylene, an alpha olefin having from three to ten carbon atoms, and a copolymerizable non-conjugated diene such as 5-ethylidene-2-norbornene, dicyclopentadiene, 1,4-hexadiene, and the like. As will be understood by those skilled in the art, the impact modifier may or may not have one or more carboxyl moieties attached thereto. The carboxyl moiety may be introduced during the preparation of the polyolefin by copolymerizing with an unsaturated carboxyl-containing monomer. Preferred is a copolymer of ethylene and maleic anhydride monoethyl ester. The carboxyl moiety may also be introduced by grafting the polyolefin with an unsaturated compound containing a carboxyl moiety, such as an acid, ester, diacid, diester, acid ester, or anhydride. A preferred grafting agent is maleic anhydride. Blends of polyolefins, such as polyethylene, polypropylene, and EPDM polymers with polyolefins that have been grafted with an unsaturated compound containing a carboxyl moiety may be used as an impact modifier. The impact modifier may be based on ionomers. By "ionomer", it is meant a carboxyl group containing polymer that has been neutralized or partially neutralized with metal cations such as zinc, sodium, or lithium and the like. Examples of ionomers are described in US patents 3,264,272 and 4,187,358. Examples of suitable carboxyl group containing polymers include, but are not limited to, ethylene/acrylic acid copolymers and ethylene/methacrylic acid copolymers, The carboxyl group containing polymers may also be derived from one or more additional monomers, such as, but not limited to, butyl acrylate. Zinc salts are preferred neutralizing agents. Ionomers are commercially available under the trademark Surlyn^{®} from E.I. du Pont de Nemours and Co., Wilmington, DE. When present, the one ore more impact modifiers comprise up to at or about 30 wt-%, or preferably from at or about 3 to at or about 25 wt-%, or more preferably from at or about 5 to at or about 20 wt-%, the weight percentage being based on the total weight of the surface resin composition or the matrix resin composition or the overmolding resin composition, as the case may be.

The surface resin composition and/or the matrix resin composition and/or the overmolding resin composition may further comprise one or more heat stabilizers. The one or more heat stabilizers are preferably selected from the group consisting of copper salts and/or derivatives thereof, hindered amine antioxidants, phosphorus antioxidants and mixtures thereof and more preferably from copper salts and/or derivatives combined with a halide compound, from hindered phenol antioxidants, hindered amine antioxidants, phosphorus antioxidants and mixtures thereof. Examples of copper salts and/or derivatives thereof include without limitation copper halides or copper acetates; divalent manganese salts and/or derivatives thereof and mixtures thereof. Preferably, copper salts and/or derivatives are used in combination with halide compounds and/or phosphorus compounds and more preferably copper salts are used in combination with iodide or bromide compounds, and still more preferably, with potassium iodide or potassium bromide. When present, the one or more heat stabilizers are present in an amount from at or about 0.1 to at or about 3 wt-%, or preferably from at or about 0.1 to at or about 1 wt-%, or more preferably from at or about 0.1 to at or about 0.7 wt-%, the weight percentage being based on the total weight of the surface resin composition or the matrix resin composition or the overmolding resin composition, as the case may be. The addition of the one or more heat stabilizers further improves the thermal stability of the first component and the overmolded composite structure and during their manufacture as well as their thermal stability upon use and time. In addition to the improved heat stability, the presence of the one or more heat stabilizers may allow an increase of the temperature that is used during the impregnation of the first component thus reducing the melt viscosity of the matrix resin and/or the polyamide composition described herein. As a consequence of a reduced melt viscosity of the matrix resin and/or the polyamide surface resin composition, impregnation rate may be increased.

The surface resin composition and/or the matrix resin composition and/or the overmolding resin composition may further contain one or more oxidative stabilizers such as for example phosphorus antioxidants (e.g. phosphite or phosphonite stabilizers), hindered phenol stabilizers, aromatic amine stabilizers, thioesters, and phenolic based anti-oxidants that hinder thermally induced oxidation of polymers where high temperature applications are used. When present, the one or more oxidative stabilizers comprise from at or about 0.1 to at or about 3 wt-%, or preferably from at or about 0.1 to at or about 1 wt-%, or more preferably from at or about 0.1 to at or about 0.7 wt-%, the weight percentage being based on the total weight of the surface resin composition or the matrix resin composition or the overmolding resin composition, as the case may be.

The surface resin composition and/or the matrix resin composition and/or the overmolding resin composition may further contain one or more reinforcing agents such as glass fibers, glass flakes, carbon fibers, mica, wollastonite, calcium carbonate, talc, calcined clay, kaolin, magnesium sulfate, magnesium silicate, barium sulfate, titanium dioxide, sodium aluminum carbonate, barium ferrite, and potassium titanate. When present, the one or more reinforcing agents are present in an amount from at or about 1 to at or about 60 wt-%, preferably from at or about 1 to at or about 40 wt-%, or more preferably from at or about 1 to at or about 35 wt-%, the weight percentages being based on the total weight of the surface resin composition or the matrix resin composition or the overmolding resin composition, as the case may be.

The surface resin composition and/or the matrix resin composition and/or the overmolding resin composition may further contain one or more ultraviolet light stabilizers such as hindered amine light stabilizers (HALS), carbon black, substituted resorcinols, salicylates, benzotriazoles, and benzophenones.

The surface resin composition and/or the matrix resin composition and/or the overmolding resin composition may further contain one or more flame retardant agents such as metal oxides (wherein the metal may be aluminum, iron, titanium, manganese, magnesium, zirconium, zinc, molybdenum, cobalt, bismuth, chromium, tin, antimony, nickel, copper and tungsten), metal powders (wherein the metal may be aluminum, iron, titanium, manganese, zinc, molybdenum, cobalt, bismuth, chromium, tin, antimony, nickel, copper and tungsten), metal salts such as zinc borate, zinc metaborate, barium metaborate, zinc carbonate, magnesium carbonate, calcium carbonate and barium carbonate, metal phosphinates (wherein the metal may be aluminum, zinc and calcium), halogenated organic compounds like decabromodiphenyl ether, halogenated polymer such as poly(bromostyrene) and brominated polystyrene, melamine pyrophosphate, melamine cyanurate, melamine polyphosphate, red phosphorus, and the like.

With the aim of further reducing the melt viscosity of the matrix resin composition, the matrix resin composition described herein may further comprise one or more rheology modifiers selected from the group consisting of hyperbranched polymers (also known as dendritic or highly branched polymers, dendritic macromolecules or arborescent polymers), molecular chain breaking agents and mixtures thereof.

Hyperbranched polymers are three dimensional highly branched molecules having a treelike structure. Hyperbranched polymers are macromolecules that comprise one or more branching comonomer units. The branching units comprise branching layers and optionally a nucleus (also known as core), one or more spacing layers and/or a layer of chain terminating molecules. Continued replication of the branching layers yields increased branch multiplicity, branch density, and an increased number of terminal functional groups compared to other molecules. Preferred hyperbranched polymers include hyperbranched polyesters. Preferred examples of hyperbranched polymers are those described in US 5,418,301 US 2007/0173617. The use of such hyperbranched polymers in thermoplastic resins is disclosed in US 6,225,404, US 6,497,959, US 6,663,966, WO 2003/004546, EP 1424360 and WO 2004/111126. This literature teaches that the addition of hyperbranched polymeric polyester macromolecules to thermoplastic compositions leads to improved rheological and mechanical properties due to the reduction of the melt viscosity of the composition and, therefore, leads to an improved processability of the thermoplastic composition. When present, the one or more hyperbranched polymers comprise from at or about 0.05 to at or about 10 wt-%, or more preferably from at or about 0.1 to at or about 5 wt-%, the weight percentage being based on the total weight of the matrix resin composition.

Examples of molecular chain breaking agents include without limitation aliphatic dicarboxylic acids and aromatic dicarboxylic acids. Specific examples thereof are oxalic acid, malonic acid, succinic acid, adipic acid, azelaic acid, sebacic acid, dodecanedioic acid and isomers of phthalic acid. When present, the one ore more molecular chain breaking agents comprise from at or about 0.05 to at or about 5 wt-%, or more preferably from at or about 0.1 to at or about 3 wt-%, the weight percentage being based on the total weight of the matrix resin composition.

The surface resin composition and/or the matrix resin composition and/or the overmolding resin composition may further include modifiers and other ingredients, including, without limitation, flow enhancing additives, lubricants, antistatic agents, coloring agents (including dyes, pigments, carbon black, and the like), flame retardants, nucleating agents, crystallization promoting agents and other processing aids known in the polymer compounding art.

Fillers, modifiers and other ingredients described above may be present in amounts and in forms well known in the art, including in the form of so-called nano-materials where at least one of the dimensions of the particles is in the range of 1 to 1000 nm.

A preferred surface resin composition and/or matrix resin composition and/or overmolding resin composition is the following polyamide composition: a polyamide composition comprising a) a polyamide resin, preferably a polyamide copolymer made of adipic acid and 1,6-hexamethylenediamine (PA6,6), and b) from at or about 0.5 wt-% to at or about 5 wt-% of dipentaerythritol, the weight percentages being based on the total weight of the polyamide composition. This composition may further comprise one or more heat stabilizers, preferably the one or more heat stabilizers are selected from copper salts combined with a halide compound and more preferably copper iodide combined with potassium iodide. When present, the one or more heat stabilizers are present in an amount from at or about 0.1 to at or about 0.7 wt-%, the weight percentages being based on the total weight of the polyamide composition.

Preferably, the surface resin composition and/or the matrix resin composition and/or the overmolding resin composition are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

The overmolded composite structure according to the present invention may be manufactured by a process comprising a step of overmolding the first component described above with the overmolding resin composition. By "overmolding", it is meant that a second component comprising the overmolding resin composition described herein is molded or extruded onto at least one portion of the surface of the first component, which surface is made of a surface resin composition.

The overmolding process includes that the second component is molded in a mold already containing the first component, the latter having been manufactured beforehand as described hereafter, so that the first and second components are adhered to each other over at least a portion of the surface of the first component. The first component is positioned in a mold having a cavity defining the outer surface of the final overmolded composite structure. The overmolding resin composition may be overmolded on one side or on both sides of the first component and it may fully or partially encapsulate the first component. After having positioned the first component in mold, the overmolding resin composition is then introduced in a molten form. The first component and the second component are adhered together by overmolding. The at least two parts are preferably adhered together by injection or compression molding as an overmolding step, and more preferably by injection molding.

The first component can be made by a process that comprises a step of impregnating the fibrous material with the matrix resin composition, wherein at least a portion of the surface of the first component is made of the surface resin composition. Preferably, the fibrous material is impregnated with the matrix resin by thermopressing. During thermopressing, the fibrous material, the matrix resin composition and the surface resin composition undergo heat and pressure in order to allow the plastics to melt and penetrate through the fibrous material and, therefore, to impregnate said fibrous material. Typically, thermopressing is made at a pressure between 2 and 100 bars and more preferably between 10 and 40 bars and a temperature which is above the melting point of the matrix resin composition and the surface resin composition, preferably at least about 20°C above the melting point to enable a proper impregnation. Heating may be done by a variety of means, including contact heating, radiant gas heating, infra red heating, convection or forced convection, induction heating, microwave heating or combinations thereof.

Due to the improved heat stability obtained by adding the one or more polyhydric alcohols having more than two hydroxyl groups in the polyamide composition, the temperature that is used during the impregnation of the first component can be increased relative to a polyamide resin without a polyhydric alcohol having more than two hydroxyl groups. The reduced melt viscosity of the matrix resin obtained by this increase of temperature allows to increase the impregnation rate thus improving the overall manufacturing rate of the overmolded composite structure.

The impregnation pressure can be applied by a static process or by a continuous process (also known as dynamic process), a continuous process being preferred for reasons of speed. Examples of impregnation processes include without limitation vacuum molding, in-mold coating, cross-die extrusion, pultrusion, wire coating type processes, lamination, stamping, diaphragm forming or press-molding, lamination being preferred. During lamination, heat and pressure are applied to the fibrous material, the matrix resin composition and the surface resin composition through opposing pressured rollers or belts in a heating zone, preferably followed by the continued application of pressure in a cooling zone to finalize consolidation and cool the impregnated fibrous material by pressurized means. Examples of lamination techniques include without limitation calendering, flatbed lamination and double-belt press lamination. When lamination is used as the impregnating process, preferably a double-belt press is used for lamination.

Should the matrix resin composition and the surface resin composition be different, the surface resin composition always faces the environment of the first component so as to be accessible when the overmolding resin composition is applied onto the first component.

The matrix resin composition and the surface resin composition are applied to the fibrous material by conventional means such as for example powder coating, film lamination, extrusion coating or a combination of two or more thereof, provided that the surface resin composition is applied on at least a portion of the surface of the first component so as to be accessible when the overmolding resin composition is applied onto at least a portion of the surface of the first component.

During a powder coating process, a polymer powder which has been obtained by conventional grinding methods is applied to the fibrous material. The powder may be applied onto the fibrous material by scattering, sprinkling, spraying, thermal or flame spraying, or fluidized bed coating methods. Optionally, the powder coating process may further comprise a step which consists in a post sintering step of the powder on the fibrous material. The matrix resin composition and the surface resin composition are applied to the fibrous material such that at least of portion of the surface of the first component is made of the surface resin composition. Subsequently, thermopressing is performed on the powder coated fibrous material, with an optional preheating of the powder coated fibrous material outside of the pressurized zone.

During film lamination, one or more films made of the matrix resin composition and one or more films made of the surface resin composition which have been obtained by conventional extrusion methods known in the art such as for example blow film extrusion, cast film extrusion and cast sheet extrusion are applied to the fibrous material, e.g. by layering. Subsequently, thermopressing is performed on the assembly comprising the one or more films made of the matrix resin composition and the one or more films made of the surface resin composition and the one or more fibrous materials. In the resulting first component, the films melt and penetrate around the fibrous material as a polymer continuum surrounding the fibrous material.

During extrusion coating, pellets and/or granulates made of the matrix resin composition and pellets and/or granulates made of the surface resin composition are melted and extruded through one or more flat dies so as to form one or more melt curtains which are then applied onto the fibrous material by laying down the one or more melt curtains. Subsequently, thermopressing is performed on the assembly comprising the matrix resin composition, the surface resin composition and the one or more fibrous materials

With the aim of improving the adhesion between the surface of the first component and the overmolding resin, it is conventional to preheat the first component at a temperature close to but below the melt temperature of the matrix resin composition prior to the overmolding step and then to rapidly transfer the heated first component for overmolding. Such a preheating step may be done by a variety of means, including contact heating, radiant gas heating, infra red heating, convection or forced convection air heating, induction heating, microwave heating or combinations thereof.

Depending on the end-use application, the first component may be shaped into a desired geometry or configuration, or used in sheet form prior to the step of overmolding the overmolding resin composition. The first component may be flexible, in which case it can be rolled.

The process for making a shaped first component further comprises a step of shaping the first component, said step arising after the impregnating step i). The step of shaping the composite structure obtained under step i) may be done by compression molding, stamping, direct forming in an injection molding machine, or any technique using heat and/or pressure; compression molding and stamping being preferred. Preferably, pressure is applied by using a hydraulic molding press. During compression molding or stamping, the first component is preheated to a temperature above the melt temperature of the surface resin composition and preferably above the melt temperature of the matrix resin composition by heated means and is transferred to a forming or shaping means such as a molding press containing a mold having a cavity of the shape of the final desired geometry whereby it is shaped into a desired configuration and is thereafter removed from the press or the mold after cooling to a temperature below the melt temperature of the surface resin composition and preferably below the melt temperature of the matrix resin composition. While it is known that a specific issue of the manufacture of overmolded composite structures is related to the thermo-oxidation and degradation of the first component and especially the thermal degradation of the surface of the first component during the preheating step(s) described above and during the shaping step, the good heat stability of the first component described herein, especially the good heat stability of the surface resin composition and the matrix resin composition, leads to overmolded composite structures that resist to the operational manufacturing environment without undue reduction in mechanical performance that would reduce the heat stability and the mechanical performance of the overmolded composite structure upon use and time.

With the aim of improving the adhesion between the overmolding resin and the surface resin composition, the surface of the first component may be a textured surface so as to increase the relative surface available for overmolding, such textured surface may be obtained during the step of shaping by using a press or a mold having for example porosities or indentations on its surface. As mentioned above for the non-shaped first component and with the aim of improving the adhesion between the surface of the shaped first component and the overmolding resin, it is conventional to preheat the shaped first component at a temperature close to but below the melt temperature of the matrix resin composition prior to the overmolding step and then to rapidly transfer the heated first component for overmolding. Such a preheating step may be done by a variety of means, including contact heating, radiant gas heating, infra red heating, convection or forced convection air heating, induction heating, microwave heating or combinations thereof.

Alternatively, a one step process comprising the steps of shaping and overmolding the first component in a single molding station may be used. This one step process avoids the step of compression molding or stamping the first component in a mold or a press, avoids the optional preheating step and the transfer of the preheated first component to the molding station. During this one step process, the first component is heated outside, adjacent to or within the molding station at a temperature at which the first component is conformable or shapable during the overmolding step, preferably the first component is heated to a temperature above its melt temperature. The shape of the first component is conferred by the mold, after which it is overmolded.

The overmolded composite structures according to the present invention may be used in a wide variety of applications such as for example as components for automobiles, trucks, commercial airplanes, aerospace, rail, household appliances, computer hardware, hand held devices, recreation and sports, structural component for machines, structural components for buildings, structural components for photovoltaic or wind energy equipments or structural components for mechanical devices.

Examples of automotive applications include without limitation seating components and seating frames, engine cover brackets, engine cradles, suspension arms and cradles, spare tire wells, chassis reinforcement, floor pans, front-end modules, steering column frames, instrument panels, door systems, body panels (such as horizontal body panels and door panels), tailgates, hardtop frame structures, convertible top frame structures, roofing structures, engine covers, housings for transmission and power delivery components, oil pans, airbag housing canisters, automotive interior impact structures, engine support brackets, cross car beams, bumper beams, pedestrian safety beams, firewalls, rear parcel shelves, cross vehicle bulkheads, pressure vessels such as refrigerant bottles and fire extinguishers and truck compressed air brake system vessels, hybrid internal combustion/electric or electric vehicle battery trays, automotive suspension wishbone and control arms, suspension stabilizer links, leaf springs, vehicle wheels, recreational vehicle and motorcycle swing arms, fenders, roofing frames and tank flaps.

Examples of household appliances include without limitation washers, dryers, refrigerators, air conditioning and heating. Examples of recreation and sports include without limitation inline-skate components, baseball bats, hockey sticks, ski and snowboard bindings, rucksack backs and frames, and bicycle frames. Examples of structural components for machines include electrical/electronic parts such as for example housings for hand held electronic devices, computers.

### EXAMPLES

The following materials were used for preparing the composites structures according to the present invention and comparative examples.

### Materials

The materials below make up the compositions used in the Examples and Comparative Examples.
**Polyamide1:** polyamide made of adipic acid and 1,6-hexamethylenediamine with a weight average molecular weight of around 32000 Daltons. This polymer is called PA6,6 and is commercially available, for example, from E. I. du Pont de Nemours and Company.
**Overmolding resin:** a composition comprising a polyamide (PA2) made of adipic acid and 1,6-hexamethylenediamine, 30 % glass fibers by weight of the total composition, and heat stabilizer, the resin is commercially available from E. L du Pont de Nemours and Company under the name Zytel^{®} 70G33HS1L NC010.
**Polyhydric alcohol:** dipentaerythritol commercially available from Perstorp Speciality Chemicals AB, Perstorp, Sweden as Di-Penta 93.

### Preparation of films

The resin compositions used in the Examples (abbreviated as "E" in the table), Comparative Examples (abbreviated as "C" in the table) were prepared by melt-compounding the ingredients in a twin-screw extruder. Upon exiting the extruder, the compositions were cooled and pelletized. The compounded mixtures was extruded in the form of laces or strands, cooled in a water bath, chopped into granules and placed into sealed aluminum lined bags in order to prevent moisture pick up. Compositions listed in Table 1 were cast into about 102 micron films.

### Preparation of the composite structures

The composite structures used for preparing the overmolding composite structures C1 and E1 were prepared by stacking eight layers having a thickness of about 102 microns and made of the compositions listed in Table 1 and three layers of woven continuous glass fiber textile (E-glass fibers having a diameter of 17 microns, 0.4% of a silane-based sizing and a nominal roving tex of 1200 g/km that have been woven into a 2/2 twill (balanced weave) with an areal weight of 600 g/m²) in the following sequence: two layers made of the compositions listed in Table 1, one layer of woven continuous glass fiber textile, two layers of layers made of the compositions listed in Table 1, one layer of woven continuous glass fiber textile, two layers of layers made of the compositions listed in Table 1, one layer of woven continuous glass fiber textile and two layers of layers made of the compositions listed in Table 1.

The composite structures were prepared using an isobaric double press machine with counter rotating steel belts, both supplied by Held GmbH.

The different films enterered the machine from unwinders in the previously defined stacking sequence. The heating zones were about 2000 mm long and the cooling zones were about 1000 mm long. Heating and cooling were maintained without release of pressure. The composite structures were prepared with the following conditions: a lamination rate of 1 m/min, a maximum machine temperature of 360°C and a laminate pressure of 40 bar. The so-obtained composite structures had an overall thickness of about 1.45 mm.

### Preparation of the overmolded composite structures

The overmolded composite structures listed in Table 1 were made by over injection molding about 1.9 mm of the overmolding resin compositions listed in Table 1 onto the composite structures obtained as described above.

The composite structures comprising a surface made of the surface resin compositions listed in Table 1, the matrix resin compositions listed in Table 1 and the fibrous material described above were cut into 3x5" (about 76 mm x 127 mm) specimens and placed into a mold cavity as inserts and were over injection molded with the overmolding resin compositions listed in Table 1 by a molding machine (Nissei Corp., Model FN4000, 1752 KN, 148cc (6 oz.)). The mold was fitted with a 1/8" x 3" x 5" (about 3.2 mm x 76 mm x 127 mm) plaque cavity with a bar gate, and electrically heated at 100°C. The composite structures were preheated before the over injection molding step at 150°C in an oven and were inserted manually into the mold cavity. The injection machine was set at 280°C.

### Heat ageing.

The test specimens were heat aged in re-circulating air ovens at 180°C or 210°C.

At a 550 hours heat aging time, the test specimens were removed from the oven and flexural testing was then measured.

**Flexural Modulus** Flexural modulus refers to the ratio of stress to strain in flexural deformation or the compliance of a material during bending. Flexural strength refers to the ratio of applied force needed to bend the sample to the sample cross sectional area and is commonly used as an indication of a material's ability to bear (or to sustain) load when flexed. The overmolded composite structures obtained as described above were cut into 1/2" (about 12.7 mm) wide by 3" (about 76 mm) long test specimens using a water jet machine. Flexural modulus was tested on the test specimens made from cutting the overmolded composite structures that did not delaminate, via a 3 point bend method ISO-178, and the results are shown in Table 1. The retention of flexural modulus corresponds to the percentage of the flexural modules after heat aging at 180°C or 210°C for 550 hours in comparison with the value of the specimens prior to heat exposure considered as being 100 percent. Retention results are given in Table 1.

As shown in Table 1, the overmolded composite structures according to the present invention (E1), i.e. overmolded composite structures, wherein the surface resin composition and the matrix resin composition of the composite structures comprised a polyamide resin and a polyhydric alcohol having more than two hydroxyl groups, retained flexural modulus after heat aging while the comparative overmolded composite structures C1 had reduction in flexural modulus.

**Table 1**

| | **Overmolded composite structure C1** | **Overmolded composite structure E1** |
|---|---|---|
| Matrix resin composition | 100 wt∼% PA1 | blend of: 98.5 wt-% of PA1 and 1.5 wt-% DPE |
| Surface resin composition | 100 wt∼% PA1 | biend of: 98.5 wt-% of PA1 and 1.5 wt-% DPE |
| Overmolding composition | blend of: | blend of: |
| | PA2, 30 wt-% glass fibers, and heat stabilizer | PA2. 30 wt-% glass fibers, and heat stabilizer PA2 |
| Flexural modulus/ Non-heat aged Retention / % Flexural modulus value/ GPa | 100% (6.48) | 100% (4.79) |
| Flexural modulus / heat aged for 550 hours at 180°C Retention / % Flexural modulus value/ GPa | 95% (6,18) | 125% (6.01) |
| Flexural modulus / heat aged for 550 hours at 210°C Retention/% Flexural molulus value/GPa | 91% (5.88) | 109%(5.23) |

## Claims

1. An overmolded composite structure comprising:
i) a first component having a surface, which surface has at least a portion made of a surface resin composition, and comprising a fibrous material selected from the group consisting of nonwoven structures, textiles, fibrous battings and combinations thereof, said fibrous material being impregnated with a matrix resin composition, wherein said surface resin composition and said matrix resin composition are polyamide compositions comprising a) one or more polyamide resins, and b) one or more polyhydric alcohols having more than two hydroxyl groups,
ii) a second component comprising an overmolding resin composition,
wherein said second component is adhered to said first component over at least a portion of the surface of said first component the portion of the surface being made of said surface resin composition.

2. The overmolded composite structure according to claim 1, wherein the overmolding resin composition is made of one or more polyamide resins or is a polyamide compositions comprising a) one or more polyamide resins, and b) one or more polyhydric alcohols having more than two hydroxyl groups.

3. The overmolded composite structure according to any preceding claims, wherein the one or more polyhydric alcohols are present in the polyamide compositions independently in an amount from 0.25 wt-% to 15 wt-%, the weight percentage being based on the total weight of the polyamide composition.

4. The overmolded composite structure according to claim 3, wherein the one or more polyhydric alcohols are present independently in an amount from 0.5 wt-% to 10 wt-%, the weight percentage being based on the total weight of the polyamide composition.

5. The overmolded composite structure according to any preceding claims, wherein the one or more polyhydric alcohols are 31 independently selected from the group consisting of dipentaerythritol, tripentaerythritol, pentaerythritol and mixtures thereof.

6. The overmolded composite structure according to any preceding claims, wherein the one or more polyamide resins are independently selected from the group consisting of fully aliphatic polyamide resins, semi-aromatic polyamide resins and mixtures thereof.

7. The overmolded composite structure according to claim 6, wherein the fully aliphatic polyamide resins are independently selected from the group consisting of PA6; PA11; PA12; PA4,6; PA6,6; PA,10; PA6,12; PA10,10 and copolymers and blends of the same.

8. The overmolded composite structure according to claim 6 or 7, wherein the semi-aromatic polyamide resins are independently selected from the group consisting of PA6T; PA6I/6T; PA6,T/6,6, PAMXD6; hexamethylene terphthalamide/2-methylpentamethylene terphthalamide copolyamide (PA6T/DT) and copolymers and blends of the same.

9. The overmolded composite structure according to any preceding claim in the form of components for automobiles, trucks, commercial airplanes, aerospace, rail, household appliances, computer hardware, hand held devices, recreation and sports, structural component for machines, structural components for buildings, structural components for photovoltaic or wind energy equipments or structural components for mechanical devices.

10. A process for making an overmolded composite structure comprising a step of overmolding a second component comprising
an overmolding resin composition on a first component,
wherein the first component comprises a fibrous material and has a surface,
said surface having at least a portion made of a surface resin composition,
said fibrous material being selected from the group consisting of non-woven structures, textiles, fibrous battings and combinations
thereof and said fibrous material being impregnated with a matrix resin composition,
wherein said surface resin composition and said matrix resin composition are polyamide compositions comprising a) one or more polyamide resins, and b) one or more polyhydric alcohols having more than two hydroxyl groups, and wherein the second component is molded or extruded to the first component onto at least a portion of the surface of the first component, which surface is made of said surface resin composition.

11. The process according to claim 10, wherein the overmolding resin composition is made of one or more polyamide-resins or is selected from polyamide compositions comprising a) one or more polyamide resins, and b) one or more polyhydric alcohols having more than two hydroxyl groups.

12. The process according to claim 10 or 11, wherein the one or more polyhydric alcohols are present in the polyamide compositions independently in an amount from 0.25 wit-% to 15 wt-%, the weight percentage being based on the total weight of the polyamide composition.

13. The process according to any one of claims 10 to 12, wherein the one or more polyhydric alcohols are independently selected from the group consisting of dipentaerythritol, tripentaerythritol, pentaerythritol and mixtures thereof.

14. The process according to any one of claims 10 to 13, further comprising a step of impregnating the fibrous material with the matrix resin composition, wherein at least a portion of the surface of the first component is made of the surface resin composition, said step arising before the step of overmolding.

15. The process according to claim 14, further comprising a step of shaping the first component, said step of shaping arising after the step of impregnating but before the step of overmolding.

## Patentansprüche

1. Umspritztes Verbundstoffgebilde umfassend:
i) eine erste Komponente, die eine Oberfläche aufweist, welche Oberfläche mindestens einen Teil aufweist, der aus einer Oberflächenharzzusammensetzung hergestellt ist, und ein faseriges Material umfasst ausgewählt aus der Gruppe bestehend aus Vliesstoffgebilden, Textilien, faserigen Wattierungen und Kombinationen davon, wobei das faserige Material mit einer Matrixharzzusammensetzung imprägniert ist, wobei die Oberflächenharzzusammensetzung und die Matrixharzzusammensetzung Polyamidzusammensetzungen sind, die a) ein oder mehrere Polyamidharze und b) einen oder mehrere mehrwertige Alkohole, die mehr als zwei Hydroxylgruppen aufweisen, umfassen,
ii) eine zweite Komponente, die eine Umspritzungsharzzusammensetzung umfasst,
wobei die zweite Komponente an der ersten Komponente über mindestens einem Teil der Oberfläche der ersten Komponente befestigt ist, wobei der Teil der Oberfläche aus der Oberflächenharzzusammensetzung hergestellt ist.

2. Umspritztes Verbundstoffgebilde nach Anspruch 1, wobei die Umspritzungsharzzusammensetzung aus einem oder mehreren Polyamidharzen hergestellt oder eine Polyamidzusammensetzung ist, das/die a) ein oder mehrere Polyamidharze und b) einen oder mehrere mehrwertige Alkohole, die mehr als zwei Hydroxylgruppen aufweisen, umfasst/umfassen.

3. Umspritztes Verbundstoffgebilde nach einem der vorhergehenden Ansprüche, wobei der eine oder die mehreren mehrwertigen Alkohole in den Polymidzusammensetzungen unabhängig in einer Menge von 0,25 Gew.-% bis 15 Gew.-% vorliegt/vorliegen, wobei der Gewichtsprozentsatz auf das Gesamtgewicht der Polyamidzusammensetzung bezogen ist.

4. Umspritztes Verbundstoffgebilde nach Anspruch 3, wobei der eine oder die mehreren mehrwertigen Alkohole unabhängig in einer Menge von 0,5 Gew.-% bis 10 Gew.-% vorliegt/vorliegen, wobei der Gewichtsprozentsatz auf das Gesamtgewicht der Polyamidzusammensetzung bezogen ist.

5. Umspritztes Verbundstoffgebilde nach einem der vorhergehenden Ansprüche, wobei der eine oder die mehreren mehrwertigen Alkohole unabhängig aus der Gruppe ausgewählt ist/sind bestehend aus Dipentaerythrit, Tripentaerythrit, Pentaerythrit und Mischungen davon.

6. Umspritztes Verbundstoffgebilde nach einem der vorhergehenden Ansprüche, wobei das eine oder die mehreren Polyamidharze unabhängig aus der Gruppe ausgewählt ist/sind bestehend aus voll aliphatischen Polyamidharzen, halbaromatischen Polyamidharzen und Mischungen davon.

7. Umspritztes Verbundstoffgebilde nach Anspruch 6, wobei die voll aliphatischen Polyamidharze unabhängig aus der Gruppe ausgewählt sind bestehend aus PA6, PA11, PA12, PA4,6, PA6,6, PA10, PA6,12, PA10,10 und Copolymeren und Mischungen derselben.

8. Umspritztes Verbundstoffgebilde nach Anspruch 6 oder 7, wobei die halbaromatischen Polyamidharze unabhängig aus der Gruppe ausgewählt sind bestehend aus PA6T, PA6I/6T, PA6,T/6,6, PAMXD6, Hexamethylenterephthalamid/2-Methylpentamethylenterephthalamid-Copolymer (PA6T/DT) und Copolymeren und Mischungen derselben.

9. Umspritztes Verbundstoffgebilde nach einem der vorhergehenden Ansprüche in Form von Teilen für Fahrzeuge, Lastwagen, Verkehrsflugzeuge, Luft- und Raumfahrt, Schienenverkehr, Haushaltgeräte, Computerhardware, Handgeräte, Erholung und Sport, Bauteilen für Maschinen, strukturellen Bauteilen für Gebäude, strukturellen Bauteilen für photovoltaische oder Windenergievorrichtrungen oder strukturellen Bauteilen für mechanische Vorrichtungen.

10. Verfahren zum Herstellen eines umspritzten Verbundstoffgebildes, umfassend einen Schritt des Umspritzens einer zweiten Komponente, die eine Umspritzungsharzzussammensetzung umfasst, auf eine erste Komponente,
wobei die erste Komponente ein faseriges Material umfasst und eine Oberfläche aufweist,
wobei bei der Oberfläche mindestens ein Teil aus einer Oberflächenharzkomponente hergestellt ist,
wobei das faserige Material aus der Gruppe ausgewählt ist bestehend aus Vliesstoffgebilden, Textilien, faserigen Wattierungen und Kombinationen davon und das faserige Material mit einer Matrixharzzusammensetzung imprägniert ist,
wobei die Oberflächenharzzusammensetzung und die Matrixharzzusammensetzung Polyamidzusammensetzungen sind, die a) ein oder mehrere Polyamidharze und b) einen oder mehrere mehrwertige Alkohole, die mehr als zwei Hydroxylgruppen aufweisen, umfassen, und wobei die zweite Komponente an die erste Komponente an mindestens einen Teil der Oberfläche der ersten Komponente geformt oder extrudiert wird, welche Oberfläche aus der Oberflächenharzzusammensetzung hergestellt ist.

11. Verfahren nach Anspruch 10, wobei die Umspritzungsharzzusammensetzung aus einem oder mehreren Polyamidharzen hergestellt oder aus Polyamidzusammensetzungen ausgewählt ist, die a) ein oder mehrere Polyamidharze und b) einen oder mehrere mehrwertige Alkohole, die mehr als zwei Hydroxylgruppen aufweisen, umfassen.

12. Verfahren nach Anspruch 10 oder 11, wobei der eine oder die mehreren mehrwertigen Alkohole in den Polymidzusammensetzungen unabhängig in einer Menge von 0,25 Gew.-% bis 15 Gew.-% vorliegen, wobei der Gewichtsprozentsatz auf das Gesamtgewicht der Polyamidzusammensetzung bezogen ist.

13. Verfahren nach einem der Ansprüche 10 bis 12, wobei der eine oder die mehreren mehrwertigen Alkohole unabhängig aus der Gruppe ausgewählt ist/sind bestehend aus Dipentaerythrit, Tripentaerythrit, Pentaerythrit und Mischungen davon.

14. Verfahren nach einem der Ansprüche 10 bis 13, des Weiteren einen Schritt des Imprägnierens des faserigen Materials mit der Matrixharzzusammensetzung umfassend, wobei mindestens ein Teil der Oberfläche der ersten Komponente aus der Oberflächenharzzusammensetzung hergestellt ist, wobei der Schritt vor dem Schritt des Überspritzens erfolgt.

15. Verfahren nach Anspruch 14, des Weiteren einen Schritt des Gestaltens der ersten Komponente umfassend, wobei der Schritt des Gestaltens nach dem Schritt des Imprägnierens, jedoch vor dem Schritt des Überspritzens erfolgt.

## Revendications

1. Structure composite surmoulée comprenant :
i) un premier composant ayant une surface, laquelle surface a au moins une portion constituée d'une composition de résine superficielle, et comprenant un matériau fibreux sélectionné parmi le groupe constitué des structures non tissées, des textiles, des molletons fibreux et de leurs combinaisons, ledit matériau fibreux étant imprégné d'une composition de résine formant matrice, dans laquelle ladite composition de résine superficielle et ladite composition de résine formant matrice sont des compositions de polyamide comprenant a) une ou plusieurs résines de polyamide, et b) un ou plusieurs alcools polyhydriques ayant plus de deux groupes hydroxyle,
ii) un second composant comprenant une composition de résine de surmoulage,
dans laquelle ledit second composant adhère audit premier composant sur au moins une portion de la surface dudit premier composant, la portion de la surface étant constituée de ladite composition de résine superficielle.

2. Structure composite surmoulée selon la revendication 1, dans laquelle la composition de résine de surmoulage est constituée d'une ou plusieurs résines de polyamide ou est une composition de polyamide comprenant a) une ou plusieurs résine(s) de polyamide, et b) un ou plusieurs alcool(s) polyhydrique(s) ayant plus de deux groupes hydroxyle.

3. Structure composite surmoulée selon l'une quelconque des revendications précédentes, dans laquelle le un ou les plusieurs alcool(s) polyhydrique(s) est (sont) présent(s) dans les compositions de polyamide indépendamment en une quantité allant de 0,25 % en pds à 15 % en pds, le pourcentage en poids étant basé sur le poids total de la composition de polyamide.

4. Structure composite surmoulée selon la revendication 3, dans laquelle le un ou les plusieurs alcool(s) polyhydrique(s) est (sont) présent(s) indépendamment en une quantité allant de 0,5 % en pds à 10 % en pds, le pourcentage en poids étant basé sur le poids total de la composition de polyamide.

5. Structure composite surmoulée selon l'une quelconque des revendications précédentes, dans laquelle le un ou les plusieurs alcool(s) polyhydrique(s) est (sont) indépendamment sélectionné(s) parmi le groupe constitué du dipentaérythritol, tripentaérythritol, pentaérythritol et de leurs mélanges.

6. Structure composite surmoulée selon l'une quelconque des revendications précédentes, dans laquelle la une ou les plusieurs résine(s) de polyamide est (sont) indépendamment sélectionnée(s) parmi le groupe constitué des résines de polyamide entièrement aliphatiques, des résines de polyamide semi-aromatiques et de leurs mélanges.

7. Structure composite surmoulée selon la revendication 6, dans laquelle les résines de polyamide entièrement aliphatiques sont indépendamment sélectionnées parmi le groupe constitué de PA6 ; PA 11 ; PA12 ; PA4,6 ; PA6,6 ; PA,10 ; PA6,12 ; PA10,10 et de leurs copolymères et mélanges.

8. Structure composite surmoulée selon la revendication 6 ou 7, dans laquelle les résines de polyamide semi-aromatiques sont indépendamment sélectionnées parmi le groupe constitué de PA6T ; PA6I/6T ; PA6,T/6,6, PAMXD6 ; du copolyamide téréphtalamide d'hexaméthylène/téréphtalamide de z-méthylpentaméthylène (PA6T/DT) et de leurs copolymères et mélanges.

9. Structure composite surmoulée selon l'une quelconque des revendications précédentes sous la forme de composants pour automobiles, camions, aéronefs commerciaux, l'aérospatiale, le secteur ferroviaire, les appareils électroménagers, le matériel informatique, les dispositifs portables, les arts récréatifs et les sports, un composant structurel pour machines, des composants structurels pour bâtiments, des composants structurels pour les équipements à énergie photovoltaïque ou éolienne ou les composants structurels pour les dispositifs mécaniques.

10. Procédé de fabrication d'une structure composite surmoulée comprenant une étape de surmoulage d'un second composant comprenant une composition de résine de surmoulage sur un premier composant,
où le premier composant comprend un matériau fibreux et a une surface,
ladite surface ayant au moins une portion constituée d'une composition de résine superficielle,
ledit matériau fibreux étant sélectionné parmi le groupe constitué des structures non tissées, des textiles, des molletons fibreux et de leurs combinaisons et ledit matériau fibreux étant imprégné d'une composition de résine formant matrice,
dans lequel ladite composition de résine superficielle et ladite composition de résine formant matrice sont des compositions de polyamide comprenant a) une ou plusieurs résine(s) de polyamide, et b) un ou plusieurs alcool(s) polyhydrique(s) ayant plus de deux groupes hydroxyle et dans lequel le second composant est moulé ou extrudé au niveau du premier composant sur au moins une portion de la surface du premier composant, laquelle surface est constituée de ladite composition de résine superficielle.

11. Procédé selon la revendication 10, dans lequel la composition de résine de surmoulage est constituée d'une ou plusieurs résine(s) de polyamide ou est sélectionnée à partir de compositions de polyamide comprenant a) une ou plusieurs résine(s) de polyamide, et b) un ou plusieurs alcool(s) polyhydrique(s) ayant plus de deux groupes hydroxyle.

12. Procédé selon la revendication 10 ou 11, dans lequel le un ou les plusieurs alcool(s) polyhydrique(s) est (sont) présent(s) dans les compositions de polyamide indépendamment en une quantité de 0,25 % en pds à 15 % pds, le pourcentage en poids étant basé sur le poids total de la composition de polyamide.

13. Procédé selon l'une quelconque des revendications 10 à 12, dans lequel le un ou les plusieurs alcool(s) polyhydrique(s) est (sont) indépendamment sélectionné(s) parmi le groupe constitué du dipentaérythritol, tripentaérythritol, pentaérythritol et de leurs mélanges.

14. Procédé selon l'une quelconque des revendications 10 à 13, comprenant en outre une étape d'imprégnation du matériau fibreux avec la composition de résine formant matrice, dans lequel au moins une portion de la surface du premier composant est constituée de la composition de résine superficielle, ladite étape survenant avant l'étape de surmoulage.

15. Procédé selon la revendication 14, comprenant en outre une étape de façonnage du premier composant, ladite étape de façonnage survenant après l'étape d'imprégnation mais avant l'étape de surmoulage.
